# EUROPÄISCHE PATENTSCHRIFT

(11) **EP 2 420 800 B1**
(45) Veröffentlichungstag und Bekanntmachung des Hinweises auf die Patenterteilung: **31.03.2021**
(21) Anmeldenummer: 11006557.0
(22) Anmeldetag: 09.08.2011
(51) Int. Cl.: G01C 21/26, G01C 21/36

(54) **Technik zur Signalisierung von Telefonanrufen während einer Routenführung**
Technique for signalling telephone calls during route guidance
Technique de signalisation d'appels téléphoniques lors de la conduite de routes

(30) Priorität: 18.08.2010 DE 102010034684
(43) Veröffentlichungstag der Anmeldung: 22.02.2012
(73) Patentinhaber: Elektrobit Automotive GmbH, 91058 Erlangen (DE)
(72) Erfinder: Iaccarino, Silvio, 91058 Erlangen (DE)
(74) Vertreter: Continental Corporation

(56) Entgegenhaltungen:
- EP-A2- 2 068 123
- WO-A1-2010/022561
- DE-A1- 10 338 566
- US-A1- 2005 256 635
- US-A1- 2009 216 433
- US-B1- 7 395 153
- CHAKRABORTY B ET AL: "Multiobjective route selection for car navigation system using genetic algorithm", SOFT COMPUTING IN INDUSTRIAL APPLICATIONS, 2005. SMCIA/05. PROCEEDINGS OF THE 2005 IEEE MIDNIGHT-SUMMER WORKSHOP ON ESPOO, FINLAND JUNE 28-30, 2005, PISCATAWAY, NJ, USA,IEEE, 28. Juni 2005 (2005-06-28), Seiten 190-195, XP010814553, DOI: 10.1109/SMCIA.2005.1466971 ISBN: 978-0-7803-8942-7

## Beschreibung

### Gebiet der Erfindung

Die vorliegende Erfindung betrifft allgemein die Ausgabe von Manöveranweisungen im Rahmen eines Navigationsvorgangs. Insbesondere betrifft die Erfindung eine Technik zur Signalisierung von Telefonanrufen während einer Routenführung.

### Stand der Technik

Es besteht die Notwendigkeit, während eines Navigationsvorgangs (z.B. im Rahmen einer Autofahrt) mit aktuellen Informationen zur Reiseroute, zu bevorstehenden Manövern, zur aktuellen Verkehrssituation usw. versorgt zu werden. Auf diese Weise kann sich ein Fahrer frühzeitig auf bevorstehende Manöver einstellen und angemessen darauf reagieren. Diese Informationen tragen somit einerseits zur Verkehrssicherheit bei und erhöhen andererseits den Fahrkomfort. Gleichzeitig gibt es ein Bedürfnis, insbesondere während längerer Autofahrten, mit der Umwelt zu kommunizieren. Hierbei kommen regelmäßig Mobiltelefone zum Einsatz.

Eine technische Herausforderung besteht nun darin, zeitlich eng beieinander liegende Informationen von unterschiedlichen Quellen einem Fahrer derart bereitzustellen, dass sie einerseits vom Fahrer bewusst wahrgenommen werden und andererseits den Fahrer nicht allzu sehr beim Fahren ablenken. Beispielsweise kann die Ausgabe von akustischen und/oder optischen Manöveranweisungen für Wegleitpunkte einer vorgegebenen Route mit einem Telefonanruf zusammenfallen. Dabei ist nicht auszuschließen, dass ein Fahrer, welcher auf das Verkehrsgeschehen und das Telefongespräch fixiert ist, eine oder mehrere Manöveranweisungen ignoriert und somit an einem Wegleitpunkt von der vorgegebenen Route abkommt.

US 2009/0216433 A1 lehrt ein Verfahren zur Ausgabe von Navigationsinhalten und navigationsunabhängiger Inhalte, wie Werbung, Nachrichten, Telefonanrufe, usw. während einer Routenführung. Um eine Überlagerung von auszugebenden Navigationsinhalten mit auszugebenden navigationsunabhängigen Inhalten während der Routenführung zu vermeiden, wird ein Zeitfenster zu einer bevorstehenden Ausgabe von Navigationsinhalten berechnet und ein navigationsunabhängiger Inhalt in Abhängigkeit der Größe des berechneten Zeitfensters derart ausgewählt, dass dieser in seiner Gesamtheit innerhalb des berechneten Zeitfensters ausgegeben werden kann.

Aus der DE 103 38 566 A1 ist ein Verfahren gemäß Oberbegriff des Anspruch 1 und eine Vorrichtung gemäß Oberbegriff des Anspruch 9 bekannt.

### Kurzer Abriss

Der Erfindung liegt die Aufgabe zugrunde, ein Verfahren und eine Vorrichtung zur Steuerung der Signalisierung von eingehenden Telefonanrufen während einer Routenführung bereitzustellen, wobei die Wahrscheinlichkeit einer Kollision von Telefonanruf mit einer Manöveranweisung zu nachfolgenden Wegepunkten reduziert ist.

Gelöst wird diese Aufgabe mittels der im kennzeichnenden Teil der unabhängigen Ansprüche angegebenen Merkmale.

Als Wegleitpunkte einer Route werden jene üblicherwelse mittels geographischer Koordinaten definierten Punkte bezeichnet, an denen ein Fahrer eine gegenwärtig befahrene Straße verlassen kann. Wegleitpunkte werden insbesondere bei Abzweigungen und Ausfahrten definiert. Das Abbiegen an einem Wegleltpunkt stellt ein Manöver dar, welches von der Kreuzungsgeometrie und der vorgegebenen Route (Strcaßenwahl am Wegleitpunkt) abhängt. In der Manöveranwelsung wird der Fahrer auf das Manöver am bevorstehenden Wegleitpunkt hingewiesen. Die Manöveranweisung wird In der Regel in einer gewissen Entfernung vor dem Wegleitpunkt (z.B. einige hundert Meter) ausgegeben.

Bei dem Telefonanruf kann es sich um einen Sprachanruf handeln. Im Rahmen der vorliegenden Offenbarung werden von dem Begriff "Telefonanruf" jedoch auch anderweltige Telekommunikationsdienste umfasst, einschließlich Kurznachrichten (z.B. SMS oder MMS), Verkehrsansagedienste und dergleichen.

Die ausgegebene Manöveranweisung für den bevorstehenden Wegleitpunkt kann bezüglich einer für den bevorstehenden Wegleitpunkt ursprünglich (z.B. für einen späteren Zeitpunkt) vorgesehenen Manöveranweisung modifiziert sein. Die ursprünglich vorgesehene Manöveranweisung kann zur Ausgabe zu einem Zeitpunkt geplant gewesen sein, zu dem eine bestimmte Entfernung zum bevorstehenden Wegleitpunkt besteht. Die vorgesehene Manöveranweisung kann Informationen über den Abstand zum bevorstehenden Manöver, über die zu befahrende Straße, über die am Wegleitpunkt zu wählende Straße und/oder über die Abzweigungsgeometrie oder Kreuzungsgeometrie der Straßen haben. Die modifizierte Anweisung kann an die aktuelle Position des Fahrers angepasst sein. Beispielsweise kann die ausgegebene Manö-veranweisung Informationen über die aktuelle Entfernung zum bevorstehenden Wegleitpunkt umfassen. Ferner kann die modifizierte Manöveranweisung von der ursprünglich vorgesehenen Manöveranweisung verschiedene Anweisungen oder Informationen umfassen. Die modifizierte Manöveranweisung kann anstatt oder zusätzlich zur ursprünglichen vorgesehenen Manöveranweisung ausgegeben zu werden. Die Manöveranweisung kann akustisch und/oder optisch erfolgen.

Ferner können in den verkürzten Anweisungen Informationen zu Straßennamen und/oder zur Kreuzungsgeometrie (z.B. Kreisverkehr, T-Kreuzung, usw.) unterdrückt werden. Der Vorteil verkürzter Anweisungen liegt darin, dass die Verzögerung der Signalisierung des eingehenden Telefonanrufs aufgrund der Manöveranweisung möglichst gering gehalten wird.

Die Manöveranweisung wird für den bevorstehenden Wegleitpunkt bezüglich der für den bevorstehenden Wegleitpunkt ursprünglich vorgesehenen Anweisung zeitlich vorgezogen. Wird ein eingehender Telefonanruf detektiert, so werden die Ausgabe der Manöveranweisung zeitlich vorgezogen und gleichzeitig die Signalisierung des eingehenden Telefonanrufs solange verzögert, bis die vorgezogene Manöveranweisung vollständig ausgegeben wurde. Auf diese Weise werden bevorstehende Manöveranweisungen und der Eingang eines Telefongesprächs akustisch und/oder optisch in einer zeitlichen Abfolge nacheinander ausgegeben. Somit kann sichergestellt werden, dass bevorstehende Manöveranweisungen nicht durch einen eingehenden Telefonanruf überlagert werden.

Erfindungsgemäß wird ein Abstand (d, t) zwischen dem bevorstehenden Wegleitpunkt und wenigstens einem nachfolgenden (z.B. dem übernächsten) Wegleitpunkt ermittelt. Alternativ kann der Abstand (d, t) zwischen dem bevorstehenden Wegleitpunkt und wenigstens einem nachfolgenden Wegleitpunkt dann ermittelt werden, wenn der Abstand (d, t) zum bevorstehenden Wegleitpunkt einen vorgegebenen weiteren Schwellenwert unterschreitet, wobei der Betrag des weiteren Schwellenwerts kleiner als der Betrag des ersten Schwellenwerts (D₁, T₁) oder auch gleich sein kann. Abhängig davon, in welchem Abstand (d, t) die nachfolgenden Wegleitpunkte folgen, können entsprechende Anweisungen in die Manöveranweisung aufgenommen werden.

Sind die Abstände zum bevorstehenden Wegleitpunkt und zwischen dem bevorstehenden und wenigstens einem nachfolgenden Wegleitpunkt klein, so steigt die Wahrscheinlichkeit, dass das Telefongespräch über den bevorstehenden Wegleitpunkt hinaus andauert und dass weitere Anweisungen zu wenigstens einem nachfolgenden Wegleitpunkt während des Telefongesprächs folgen würden. Durch die frühzeltige Ermittlung der dem bevorstehenden Wegleitpunkt nachfolgenden Wegleitpunkte, können komplizierte Routenführungen in der vorgegebenen Route frühzeitig erkannt werden und der Fahrer durch eine entsprechende Manöveranweisung frühzeitig gewarnt bzw. darauf hingewiesen werden.

Eine lokale Umleitung für die vorgegebene Route kann ermittelt werden, wenn der Abstand (d, t) zum bevorstehenden Wegleltpunkt einen vorgegebenen zweiten Schwellenwert (T₂) unterschreitet. Die Umleitung wird dabei beispielsweise auf Basis kartographischer Daten derart ermittelt, dass weitere komplizierte Manöver oder eine Abfolge an Manövern umgangen werden. Der Fahrer kann hierbei durch die Manöveranweisung auf das bevorstehende Manöver und die anschließende Umleitung hingewiesen werden. Im Anschluss daran kann der eingehende Telefonanruf entgegen genommen werden.

Die Ermittlung einer Umleitung als Reaktion auf einen eingehenden Telefonanruf kann von weiteren oder alternativen Faktoren abhängen. Erfindungsgemäß hängt die Ermittlung einer Umleitung von einem vorgegebenen dritten Schwellenwert (T₃) für die Entfernung zwischen dem bevorstehenden Wegleitpunkt und dem wenigstens einen nachfolgenden Wegleitpunkt ab. Ist der Abstand (d, t) zweier aufeinanderfolgender Wegleitpunkte klein oder ist der Abstand (d, t) mehrerer aufeinanderfolgender Wegleitpunkte relativ zum Abstand des bevorstehenden Wegleitpunkts kleiner als der dritte Schwellenwert (T₃), so wird eine Umleitung ermittelt, um den Fahrer während eines Telefonanrufs nicht mit einer komplizierten Abfolge von Manövern zu konfrontieren. Ferner kann die Ermittlung einer Umleitung vom Straßentyp abhängen, auf welchem sich das Fahrzeug gerade befindet. Befindet sich beispielsweise ein Fahrzeug auf einer Autobahn, so ist die Wahrscheinlichkeit mehrerer hintereinander folgender komplexer Manöver gering (und eine Umleitung in der Regel nicht sinnvoll).

Eine Umleitung erfolgt allgemein solange, bis der Telefonanruf beendet ist. Im Anschluss wird der Fahrer von der lokalen Umleitung auf die vorgegebene Route zurückgelotst.

Der Abstand (d, t) zu dem bevorstehenden Wegleitpunkt oder zur Ausgabe der bevorstehenden Manöveranweisung bzw. zwischen zwei aufeinanderfolgenden Wegleitpunkten kann in Form einer Entfernung (d) oder eines Zeitabstandes (t) ermittelt werden. Hierbei kann ein Zeitabstand (t) aus einer aktuellen Fahrtgeschwindigkeit vₐₖₜ und der ermittelten Entfernung zu einem bevorstehenden Wegleitpunkt oder zur Ausgabe der bevorstehenden Manöveranweisung bzw. zwischen zwei aufeinanderfolgenden Wegleitpunkten abgeschätzt werden. Als aktuelle Fahrtgeschwindigkeit vₐₖₜ kann die Geschwindigkeit des Fahrzeuges zum Zeitpunkt des Eingangs des Telefonanrufs herangezogen werden. Entsprechend dazu können der erste, zweite und/oder dritte Schwellenwert (D₁, T₁, T₂, T₃) jeweils als Zeitschwellenwert (T₁, T₂, T₃) angegeben werden. Die drei Schwellenwerte (D₁, T₁, T₂, T₃) können voreingestellt sein oder vom Fahrer bestimmt werden. Es wäre jedoch auch die Verwendung von Entfernungen und Entfernungsschwellenwerten denkbar.

Die ausgegebene Manöveranweisung kann vom Abstand (d, t) zum bevorstehenden Wegleitpunkt oder zur Ausgabe der bevorstehenden Manöveranweisung abhängen. Beispielsweise kann die ausgegebene Manöveranweisung zusätzliche Informationen zum Abstand (d, t) zum bevorstehenden Wegleitpunkt umfassen, welcher zum Zeitpunkt des Eingangs des Telefonanrufs ermittelt wurde.

Ferner sieht die Erfindung ein Computerprogrammprodukt mit Programmcode zum Durchführen des Verfahrens vor, wenn das Computerprogrammprodukt auf einer Computereinrichtung (z.B. einer Navigationsvorrichtung) ausgeführt wird. Das Computerprogrammprodukt kann hierfür auf einem computerlesbaren Aufzeichnungsmedium (z.B. einer Speicherkarte oder einem Festspeicher) abgespeichert sein.

Weiterhin sieht die Erfindung eine Vorrichtung zur Steuerung einer Signalisierung von eingehenden Telefonanrufen während einer Routenführung gemäß Anspruch 9 vor.

Erfindungsgemäß umfasst die Vorrichtung eine Einrichtung zum Ermitteln einer lokalen Umleitung, die eingerichtet ist, eine lokale Umleitung für die vorgegebene Route zu berechnen, wenn
der Abstand (d, t) zwischen dem bevorstehenden Wegleitpunkt und einem darauffolgenden Wegleitpunkt einen dritten Schwellenwert (T₃) unterschreitet Die Vorrichtung kann ferner in eine Navigationsvorrichtung integriert sein. In einer alternativen Ausführung kann die Vorrichtung Teil eines Mobiltelefons oder Smartphones sein.

### Kurze Beschreibung der Zeichnungen

Weitere Einzelheiten, Aspekte und Vorteile der hier beschriebenen Erfindung ergeben sich aus den nachfolgenden Zeichnungen. Es zeigen:
- Fig. 1: eine Navigationsvorrichtung gemäß einem Ausführungsbeispiel der vorliegenden Erfindung;
- Fig. 2: ein Verfahren gemäß einem Ausführungsbeispiel der vorliegenden Erfindung; und
- Fig. 3: eine detailliertere Darstellung des Verfahrens gemäß Fig. 2.

### Detaillierte Beschreibung

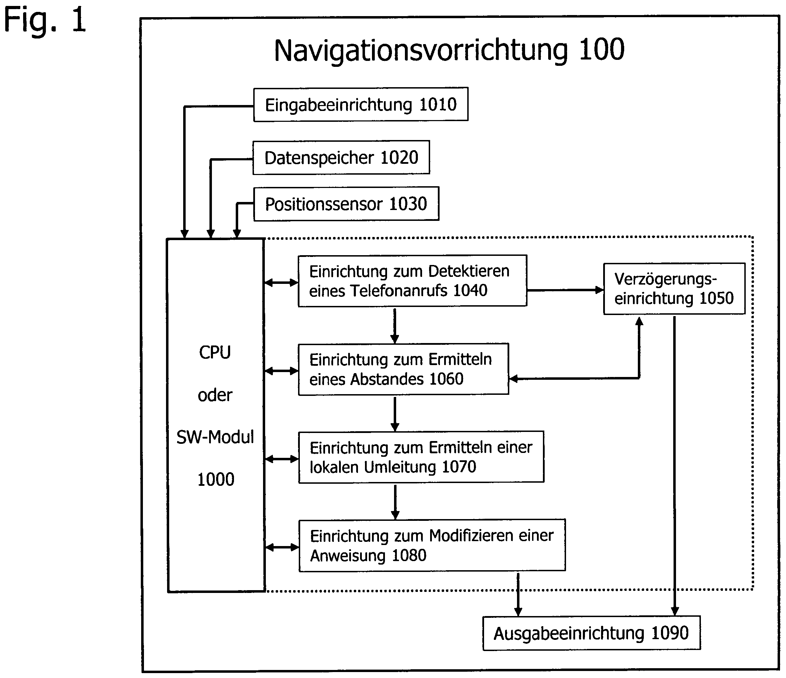

Fig. 1 zeigt in Form eines Blockdiagramms ein Ausführungsbeispiel einer erfindungsgemäßen Vorrichtung 100 in Gestalt einer Navigationsvorrichtung. Die Navigationsvorrichtung 100 kann in einem Kraftfahrzeug verbaut sein oder als tragbares Gerät (Personal Navigation Device, PND) ausgeführt sein. In diesem Fall kann die Navigationsvorrichtung mit einem Mobiltelefon, Smartphone oder Personal Digital Assistant (PDA) drahtlos oder drahtgebunden gekoppelt sein. Alternativ hierzu kann die Vorrichtung 100 oder Teile davon in einem Mobiltelefon, Smartphone oder PDA implementiert sein.

Die Navigationsvorrichtung 100 umfasst eine kemfunktionalität 1000, die als CPU ("Central Processing Unit", Zentrale Verarbeitungseinheit) oder Mikroprozessor oder als Software-Modul (SW-Modul) implementiert sein kann. Ferner umfasst die Navigationsvorrichtung 100 eine Eingabeeinrichtung 1010, einen Datenspeicher 1020, einen Positionssensor 1030 (z.B. einen GPS-Sensor), eine Einrichtung 1040 zum Detektieren eines Telefonanrufs, eine Verzögerungseinrichtung 1050, eine Einrichtung 1060 zum Ermitteln eines Abstandes, eine Einrichtung 1070 zum Ermitteln einer lokalen Umleitung, eine Einrichtung 1080 zum Modifizieren einer Anweisung und eine Ausgabeeinrichtung 1090. Die Einrichtung 1040 zum Detektieren eines Telefonanrufs, die Verzögerungseinrichtung 1050, die Einrichtung 1060 zum Ermitteln eines Abstandes, die Einrichtung 1070 zum Ermitteln einer lokalen Umleitung sowie die Einrichtung 1080 zum Modifizieren einer Anweisung können jeweils als eigenständige, mit der Kernfunktionalität 1000 in Kommunikation stehende Einrichtung oder als Teil der Kernfunktionalität 1000 implementiert sein, wie durch die gestrichelte Erweiterung der Kernfunktionalität 1000 in Fig. 1 angedeutet ist.

Die Eingabeeinrichtung 1010, der Datenspeicher 1020 und der Positionssensor 1030 stehen mit der Kernfunktionalität 1000 in kommunizierender Verbindung. Über die Eingabeeinrichtung 1010 bezieht die Kernfunktionalität 1000 routenrelevante Daten über Zielort, Zwischenstops usw. Ferner bezieht die Kernfunktionalität 1000 über den Positionssensor 1030 aktuelle Positionsinformationen und über den Datenspeicher 1020 vorab gespeicherte Kartendaten, welche jeweils den mit der Kernfunktionalität 1000 in Kommunikation stehenden Einrichtungen 1040, 1060, 1070, 1080 bei Bedarf zur Verfügung gestellt werden.

Im Datenspeicher 1020 sind in einer Datenbank kartographische Daten abgespeichert, auf deren Basis das Navigationsgerät 100 eine Route bzw. eine lokale Umleitung berechnet. Alternativ zu einer "On Board-Speicherung" von kartographischen Daten kann die Navigationsvorrichtung 100 eine Einrichtung zum Aufbau einer Online-Verbindung (z.B. GPRS-Verbindung) umfassen, um kartographische Daten von einem zentralen Server für die Ermittlung einer Route und/oder lokalen Umleitung zu beziehen.

Die Einrichtung 1040 zum Detektieren eines Telefonanrufs ist dazu eingerichtet, einen eingehenden Telefonanruf (oder allgemein eine Meldung eines Telekommunikationsdienstes) zu detektieren und diesen der Einrichtung 1060 zum Ermitteln eines Abstandes zu signalisieren. Hierfür kann die Einrichtung 1040 direkt mit einem Mobiltelefon, Smartphone oder PDA in Kommunikation stehen. Alternativ hierzu kann das Mobiltelefon, Smartphone oder PDA mit der Navigationsvorrichtung 100 in Kommunikation stehen. Der Telefonanruf wird dann über die Kernfunktionalität 1000 der Einrichtung 1040 signalisiert. Ferner kann die Einrichtung 1040 das Ende des Telefonanrufs signalisieren.

Die Einrichtung 1060 zum Ermitteln eines Abstandes steht in Kommunikation mit der Kernfunktionalität 1000 und der Einrichtung 1040. Als Reaktion auf den signalisierten Telefonanruf ermittelt die Einrichtung 1060 auf Basis kartographischer Daten und einer aktuellen Fahrzeug-Position den Abstand (d, t) eines Fahrzeugs zu einem bevorstehenden Wegleitpunkt oder zu einer Ausgabe einer bevorstehenden Manöveranweisung einer mittels kartographischer Daten berechneten Route. Der ermittelte Abstand (d, t) wird durch die Einrichtung 1060 einem Vergleich mit einem ersten oder zweiten Schwellenwert (D₁, T₁, T₂) unterzogen. Ferner ist die Einrichtung 1060 dazu ausgelegt, den Abstand (d, t) zwischen dem bevorstehenden Wegleitpunkt und wenigstens einem dem bevorstehenden Wegleitpunkt nachfolgenden Wegleitpunkt zu bestimmen. Der ermittelte Abstand (d, t) wird wiederum einem Vergleich mit einem dritten Schwellenwert (T₃) unterzogen.

Die Verzögerungseinrichtung 1050 steht in Kommunikation mit den Einrichtungen 1040, 1060 der Navigationsvorrichtung 100. Ferner kann die Verzögerungseinrichtung 1050 direkt mit einem Mobiltelefon, Smartphone oder PDA in Verbindung stehen. Die Verzögerungseinrichtung 1050 ist dazu eingerichtet, die Signalisierung von eingehenden Telefonanrufen in Abhängigkeit eines von der Einrichtung 1060 empfangenen Schwellenwertsignals zu verzögern. Dabei wird die akustische Ausgabe eines Klingeltons oder eines visuellen Hinweises auf den Telefonanruf solange verzögert, bis eine (ggf. vor die Ausgabe gezogene) Manöveranweisung ausgegeben wurde.

Die Einrichtung 1070 zum Ermitteln einer lokalen Umleitung ist dazu eingerichtet, auf Basis der im Datenspeicher 1020 oder online übertragenen kartographischen Daten eine zur berechneten Route lokale Umleitung zu ermitteln. Die Ermittlung der Umleitung erfolgt in Reaktion auf ein von der Einrichtung 1060 gesendetes Triggersignal, wobei das Triggersignal von dem dritten Schwellenwert (T₃) abhängt. Die Einrichtung 1060 analysiert zusätzlich den Straßentyp, auf welchem sich das Fahrzeug gerade befindet und entscheidet dann, ob eine Umleitung berechnet wird oder nicht.

Die Einrichtung 1080 zum Modifizieren einer Anweisung ist dazu eingerichtet, eine standardisierte Manöveranweisung für einen bevorstehenden Wegleitpunkt zu modifizieren, wenn der Abstand zum bevorstehenden Wegleitpunkt einen ersten Schwellenwert (D₁, T₁) unterschreitet. Die Manöveranweisung kann dabei gekürzt, erweitert oder mit weiteren Manöveranweisungen und/oder vorab gespeicherten Zusatzanweisungen kombiniert werden. Ferner kann die Einrichtung 1080 Anweisungen zu einer lokalen Umleitung erzeugen.
Die Ausgabeeinrichtung 1090 ist schließlich für die Ausgabe der (modifizierten) Manöveranweisungen sowie der eingehenden Telefonanrufe vorgesehen. Die Ausgabe hierfür kann akustisch und/oder optisch erfolgen. Gemäß einer Ausführung kann die Manöveranweisung optisch und der Telefonanruf akustisch ausgegeben werden.

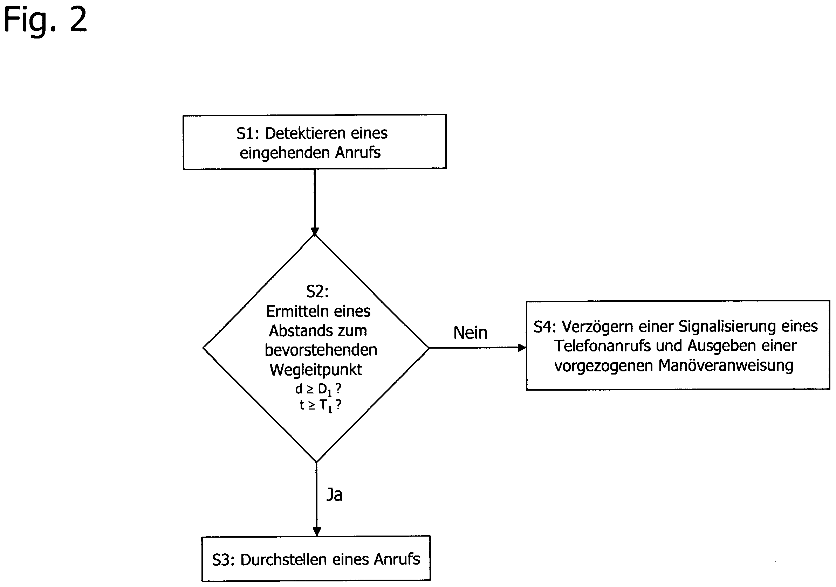

Im Folgenden wird unter Bezugnahme auf das in Fig. 2 dargestellte Flussdiagramm ein Ausführungsbeispiel des erfindungsgemäßen Verfahrens zum Steuern von eingehenden Telefonanrufen während einer Routenführung beschrieben. Das Verfahren wird anhand der in Fig. 1 dargestellten Navigationsvorrichtung 100 erläutert, kann aber auch von anderweitig konfigurierten Geräten (z.B. einem Smartphone) durchgeführt werden.

In einem ersten Schritt S1 wird mit Hilfe der Einrichtung 1040 zum Detektieren eines Telefonanrufs ein eingehender Anruf detektiert und der Einrichtung 1060 zum Ermitteln eines Abstandes signalisiert.

In einem zweiten Schritt S2 ermittelt die Einrichtung 1060 den Abstand (d, t) des Fahrzeuges zum bevorstehenden Wegleitpunkt oder zur Ausgabe der bevorstehenden Manöveranweisung der Route. Ferner wird der ermittelte Abstand (d, t) mit dem ersten Schwellenwert (D₁, T₁) verglichen. Ist der Wert des ermittelten Abstands (d, t) größer als oder gleich dem vorgegebenen ersten Schwellenwert (D₁, T₁), so wird in einem Schritt S3 der Anruf durchgestellt und über die Ausgabeeinrichtung 1090 wiedergegeben. Unterschreitet der ermittelte Abstand (d, t) jedoch den ersten Schwellenwert (D₁, T₁), so wird der eingehende Telefonanruf durch die Verzögerungseinrichtung 1050 so lange verzögert (Schritt S4), bis eine (ggf. modifizierte) Manöveranweisung für den bevorstehenden Wegleitpunkt ausgegeben ist.

Gemäß einer Ausführung wird der ermittelte Abstand (d, t) mit Hilfe einer aktuellen Fahrtgeschwindigkeit (vₐₖₜ) zu einem Zeitabstand (t) umgerechnet. Hierfür wird die aktuelle Fahrtgeschwindigkeit (vₐₖₜ) des Fahrzeugs und die Entfernung (d) zum bevorstehenden Wegleitpunkt oder zur Ausgabe der bevorstehenden Manöveranweisung zum Zeitpunkt des eingehenden Telefonanrufs herangezogen. Der Zeitabstand (t) wird dabei aus dem Quotienten aus der Entfernung (d) und der aktuellen Fahrtgeschwindigkeit (vₐₖₜ) berechnet. Entsprechend dazu wird der erste Schwellenwert (D₁, T₁) als erster Zeitschwellenwert (T₁) vorgegeben. Die Verwendung von Zeitabständen (t) und der Vergleich mit einem ersten Zeitschwellenwert (T₁) hat den Vorteil, dass die Steuerung von eingehenden Telefonanrufen der aktuellen Verkehrssituation besser angepasst werden kann. Beispielsweise kann sich ein Fahrzeug in unmittelbarer Nähe eines bevorstehenden Wegleitpunkts befinden, der Zeitabstand (t) für das Erreichen des Wegleitpunktes jedoch aufgrund eines hohen Verkehrsaufkommens oder Staus den ersten Zeitschwellenwert (T₁) überschreiten, so dass die Verzögerung eines eingehenden Telefonanrufs und die vorzeitige Ausgabe der Manöveranweisung nicht notwendig sind. Ein solcher erster Zeitschwellenwert (T₁) kann im Bereich von 5 Minuten liegen. Der erste Schwellenwert (D₁, T₁) kann voreingestellt sein oder vom Fahrer vorgegeben werden.

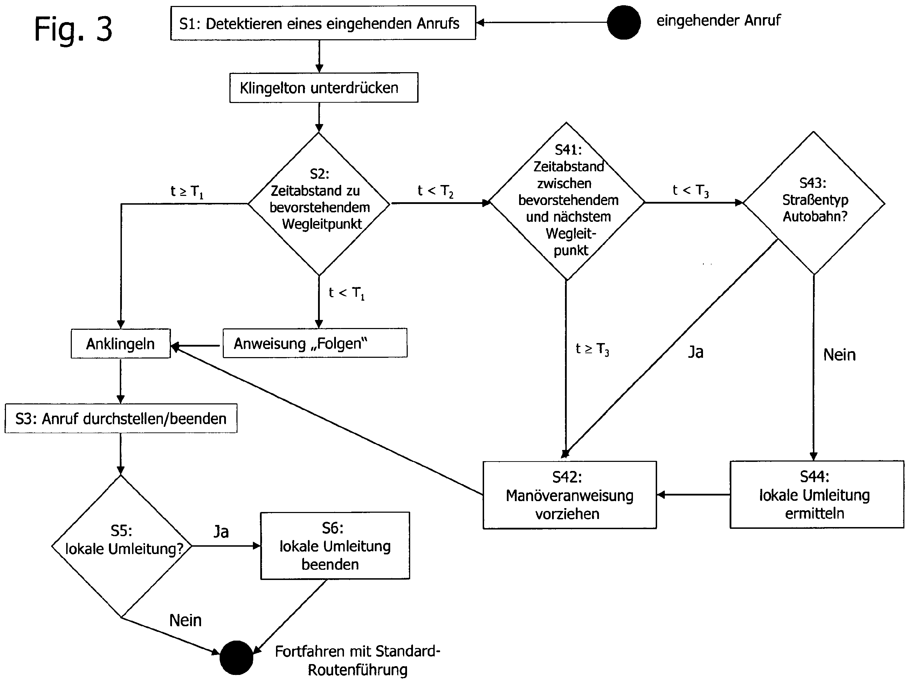

Anhand von Fig. 3 wird das in Fig. 2 vorgestellte Verfahren ausführlicher erläutert. Die zu Fig. 2 äquivalenten Schritte sind mit denselben Bezugszeichen bezeichnet.

Zunächst wird in dem ersten Schritt S1 ein eingehender Anruf detektiert. Hierbei wird der Klingelton des eingehenden Telefonanrufs durch die Verzögerungseinrichtung 1050 unterdrückt. Gleichzeitig ermittelt die Einrichtung 1060 zum Ermitteln eines Abstands in dem darauffolgenden Schritt S2 den Zeitabstand (t) zum bevorstehenden Wegleitpunkt oder zur Ausgabe der bevorstehenden Manöveranweisung. Wie oben erläutert kann der Zeitabstand (t) aus der Entfernung (d) und der aktuellen Geschwindigkeit (vₐₖₜ) zum Zeitpunkt des Eingangs des Telefonanrufs abgeschätzt werden. Ist der abgeschätzte Zeitabstand (t) größer als oder gleich dem ersten Zeitschwellenwert (T₁), so wird der Anruf während der Routenführung durchgestellt, indem der unterdrückte Klingelton der Ausgabeeinrichtung 1090 weitergeleitet wird.

Unterschreitet der ermittelte Zeitabstand (t) die erste Zeitschwelle (T₁), so wird eine Anweisung der Form "der Straße folgen" in Verbindung mit einer zusätzlichen Angabe zur Entfernung und/oder abgeschätzten Zeit bis zum bevorstehenden Wegleitpunkt (z.B. "der Straße 5 km lang folgen") von der Ausgabeeinrichtung 1090 ausgegeben. Im Anschluss daran wird der Klingelton des eingehenden Telefonanrufs wiedergegeben. Durch diese Anweisung wird der Fahrer auf ein bevorstehendes Manöver frühzeitig hingewiesen. In einer weiteren Ausführung kann die Anweisung "der Straße folgen" mit zusätzlichen Manöveranweisungen verknüpft sein (z.B. "der Straße 5 km lang folgen und im anschließenden Kreisverkehr die 2 Ausfahrt nehmen"). Der Fahrer kann dann in Kenntnis des bevorstehenden Manövers selbst entscheiden, ob er den Telefonanruf annimmt oder nicht.

Unterschreitet der im Schritt S2 bestimmte Zeitabstand (t) den zweiten Zeitschwellenwert (T₂), welcher kleiner als der erste Zeitschwellenwert (T₁) ist, so bestimmt die Einrichtung 1060 zum Ermitteln eines Abstandes in einem weiteren Schritt S41 zusätzlich den Zeitabstand (t) zwischen dem bevorstehenden Wegleitpunkt und einem dem bevorstehenden Wegleitpunkt darauffolgenden Wegleitpunkt. Typische Werte für den zweiten Zeitschwellenwert (T₂) liegen im Bereich zwischen 2 und 5 Minuten.

Ist dabei der ermittelte Zeitabstand (t) zwischen den beiden aufeinanderfolgenden Wegleitpunkten größer als der vorgegebene dritte Zeitschwellenwert (T₃), so wird in einem Schritt S42 über die Ausgabeeinrichtung 1090 eine vorgezogene Manöveranweisung ausgegeben und im Anschluss daran der unterdrückte Klingelton wiedergegeben. Die vorgezogene Manöveranweisung kann dabei bezüglich einer ursprünglichen Anweisung modifiziert sein. Sie kann beispielsweise die aktuelle Entfernung (d) und/oder einen abgeschätzten Zeitabstand (t) zum Manöver umfassen. In einer alternativen Ausführung umfasst die vorgezogene Manöveranweisung auch Anweisungen für das darauffolgende Manöver. Eine solche Anweisung kann beispielsweise lauten: "In 200 Metern an der Kreuzung links in die Hauptstraße abbiegen und anschließend nach 500 Metern im Kreisverkehr die dritte Ausfahrt nehmen". Ferner können diese Anweisungen in verkürzter Form wiedergegeben werden.

Unterschreitet der gemessene Zeitabstand (t) zwischen zwei aufeinander folgenden Wegleitpunkten die vorgegebene dritte Zeitschwelle (T₃), so wird in einem Schritt S43 und einem darauffolgenden Schritt S44 mit Hilfe der Einrichtung 1070 erforderlichenfalls eine zur vorgegebenen Route lokale Umleitung ermittelt. Zunächst wird im Schritt S43 der Straßentyp bestimmt, auf welchem sich das Fahrzeug gerade befindet. Handelt es sich um eine Autobahn, so wird keine Umleitung berechnet. In diesem Fall wird ganz analog zum Fall der Überschreitung der dritten Zeitschwelle (T₃) eine vorgezogene (modifizierte) Manöveranweisung zum bevorstehenden Wegleitpunkt ausgegeben. Andernfalls wird im Schritt S44 eine lokale Umleitung zur vorgegebenen Route ermittelt, wobei die Umleitung derart gewählt wird, dass komplizierte, aufeinanderfolgende Manöver möglichst umgangen werden. Nach Ermittlung der Umleitung wird wiederum eine vorgezogene Manöveranweisung (S42) ausgegeben, die von dem eingehenden Telefonanruf gefolgt wird. Die vorgezogene Manöveranweisung umfasst hierbei Anweisungen zum bevorstehenden Manöver und optional zusätzliche Anweisungen zur Umleitung.

Die lokale Umleitung (Schritt S5) erfolgt solange, bis das Telefongespräch beendet ist. Nach Beendigen des Telefongesprächs, wird in einem Schritt S6 die lokale Umleitung beendet, indem der Fahrer zur ursprünglichen Route zurückgelotst wird. Im Anschluss befindet sich der Fahrer wieder auf der vorgegebenen Route.

Durch das hier beschriebene Verfahren ist es möglich, Manöveranweisungen und eingehende Telefonanrufe während einer Routenführung zeitlich derart aufeinander abzustimmen, dass eingehende Telefonanrufe und Manöveranweisungen nicht zusammenfallen und dadurch die Routenführung stören. Ferner kann durch Berücksichtigung weiterer, dem bevorstehenden Wegleitpunkt nachfolgender Wegleitpunkte eine komplexe Abfolge von dicht hintereinander folgenden Manövern frühzeitig erkannt und gegebenenfalls eine Umleitung ermittelt werden, welche die komplexe Abfolge dicht hintereinander folgender Manöver umgeht. Ein Fahrer kann dann ein Telefongespräch führen ohne sich sorgen zu müssen, von der vorgegebenen Route allzu sehr abzukommen.

## Patentansprüche

1. Verfahren zur Steuerung einer Signalisierung von eingehenden Telefonanrufen während einer Routenführung, umfassend die folgenden Schritte:
- Detektieren (S1) eines eingehenden Telefonanrufs;
- Ermitteln (S2) eines Abstands (d, t) zu einem bevorstehenden Wegleitpunkt oder zu einer Ausgabe einer bevorstehenden Manöveranweisung auf einer vorgegebenen Route als Reaktion auf den detektierten Telefonanruf;
- Verzögern (S4) der Signalisierung des eingehenden Telefonanrufs, bis eine Manöveranweisung ausgegeben wurde, wenn der ermittelte Abstand (d, t) zum bevorstehenden Wegleitpunkt oder zur Ausgabe der bevorstehenden Manöveranweisung einen vorgegebenen ersten Schwellenwert (D₁, T₁) unterschreitet,
**gekennzeichnet durch**
- Ermitteln (S41) eines Abstandes zwischen dem bevorstehenden Wegleitpunkt und wenigstens einem nachfolgenden Wegleitpunkt; und
- Ermitteln (S44) einer lokalen Umleitung, wenn der Abstand (d, t) zwischen dem bevorstehenden Wegleitpunkt und dem wenigstens einen nachfolgenden Wegleitpunkt einen vorgegebenen dritten Schwellenwert (T₃) unterschreitet:
- Ausgeben (S42) einer vorgezogenen Manöveranweisung, die von einer Signalisierung des eingehenden Telefonanrufs gefolgt wird,
- Beenden (S6) der lokalen Umleitung und Ausgabe von Manöveranweisungen, die den Fahrer auf die vorgegebene Route zurücklotsen, wenn der Telefonanruf beendet ist,
wobei die lokale Umleitung derart ermittelt wird, daß eine komplexe Abfolge dicht hintereinander folgender Manöver umgangen wird, und
wobei die ausgegebene Manöveranweisung eine bezüglich einer ursprünglich vorgesehenen Manöveranweisung modifizierte Anweisung in Form einer verkürzten Anweisung und Anweisungen betreffend die lokale Umleitung umfaßt.

2. Verfahren nach Anspruch 1, wobei der wenigstens eine dem bevorstehenden Wegleitpunkt nachfolgende Wegleitpunkt in die ausgegebene Manöveranweisung mit einbezogen wird.

3. Verfahren nach einem der vorhergehenden Ansprüche, wobei die Ermittlung der lokalen Umleitung vom Straßentyp abhängt, auf welcher sich das Fahrzeug befindet.

4. Verfahren nach einem der vorhergehenden Ansprüche, wobei der erste und/oder dritte Schwellenwert (D₁, T₁, T₃) ein Zeitschwellenwert (T₁, T₃) ist und der ermittelte Abstand (d, t) ein Zeitabstand (t) ist.

5. Verfahren nach Anspruch 4, wobei der Zeitabstand (t) aus einer aktuellen Fahrtgeschwindigkeit (vₐₖₜ) und einer ermittelten Entfernung zum bevorstehenden Wegleitpunkt, zum diesem nachfolgenden Wegpunkt oder zur Ausgabe der bevorstehenden Manöveranweisung abgeschätzt wird.

6. Verfahren nach einem der vorhergehenden Ansprüche, wobei die ausgegebene Manöveranweisung vom Abstand (d, t) zum bevorstehenden Wegleitpunkt oder zur Ausgabe der bevorstehenden Manöveranweisung abhängt.

7. Computerprogrammprodukt mit Programmcode zum Durchführen des Verfahrens nach wenigstens einem der vorhergehenden Ansprüche, wenn das Computerprogrammprodukt auf einer Computereinrichtung ausgeführt wird.

8. Computerprogrammprodukt nach Anspruch 7, welches auf einem computerlesbaren Aufzeichnungsmedium abgespeichert ist.

9. Vorrichtung zur Steuerung einer Signalisierung von eingehenden Telefonanrufen während einer Routenführung, umfassend:
- eine Einrichtung (1040) zum Detektieren eines eingehenden Telefonanrufs;
- eine Einrichtung (1040) zum Signalisieren des Endes eines Telefonanrufs;
- eine Ausgabeeinrichtung (1090) zum Ausgeben von Manöveranweisungen;
- eine Einrichtung (1060) zum Ermitteln eines Abstands (d, t) zu einem bevorstehenden Wegleitpunkt oder zu einer Ausgabe einer bevorstehenden Manöveranweisung auf einer vorgegebenen Route als Reaktion auf den detektierten Telefonanruf;
- eine Verzögerungseinrichtung (1050), die eingerichtet ist, die Signalisierung des eingehenden Telefonanrufs zu verzögern, bis eine Manöveranweisung ausgegeben wurde, wenn der ermittelte Abstand (d, t) zum bevorstehenden Wegleitpunkt oder zur Ausgabe der bevorstehenden Manöveranweisung einen vorgegebenen ersten Schwellenwert (D₁, T₁) unterschreitet;
**gekennzeichnet durch**
- eine Einrichtung (1080) zum Modifizieren einer Manöveranweisung, wobei die modifizierte Manöveranweisung einer bezüglich einer ursprünglich vorgesehenen Manöveranweisung verkürzten Anweisung entspricht;
- eine Einrichtung zum Ermitteln eines Abstandes zwischen dem bevorstehenden Wegleitpunkt und wenigstens einem nachfolgenden Wegleitpunkt; und
- eine Einrichtung (1070) zum Ermitteln einer lokalen Umleitung, die eingerichtet ist, eine lokale Umleitung für die vorgegebene Route zu berechnen, wenn der Abstand (d, t) zwischen dem bevorstehenden Wegleitpunkt und einem darauffolgenden Wegleitpunkt einen dritten Schwellenwert (T3) unterschreitet, wobei
- die lokale Umleitung derart ermittelt wird, daß eine komplexe Abfolge dicht hintereinander folgender Manöver umgangen wird,
- die lokale Umleitung beendet wird, wenn der Telefonanruf oder die Meldung beendet ist, und
- die ausgegebene Manöveranweisung Anweisungen betreffend die lokale Umleitung umfaßt.

10. Navigationsvorrichtung (100), umfassend die Vorrichtung gemäß Anspruch 9.

## Claims

1. Method for controlling signalling of incoming telephone calls during routing, comprising the following steps:
- detecting (S1) an incoming telephone call;
- determining (S2) an interval (d, t) from an upcoming route reference point or from the outputting of an upcoming manoeuvring instruction on a predefined route in reaction to the detected telephone call;
- delaying (S4) the signalling of the incoming telephone call until a manoeuvring instruction has been output when the determined interval (d, t) from the upcoming route reference point or from the outputting of the upcoming manoeuvring instruction drops below a predefined first threshold value (D₁, T₁),
**characterized by**
- determining (S41) an interval between the upcoming route reference point and at least one following route reference point; and
- determining (S44) a local diversion if the interval (d, t) between the upcoming route reference point and the at least one following route reference point drops below a predefined third threshold value (T₃);
- outputting (S42) a manoeuvre instruction which has been brought forward and which is followed by signalling of the incoming telephone call,
- ending (S6) the local diversion and outputting manoeuvring instructions which direct the driver back to the predefined route when the telephone call has ended,
wherein the local diversion is determined in such a way that a complex sequence of closely successive manoeuvres is avoided, and
wherein the manoeuvring instruction which is output comprises an instruction which is modified with respect to an originally provided manoeuvring instruction and is in the form of a shortened instruction, and instructions relating to the local diversion.

2. Method according to Claim 1, wherein the at least one route reference point which follows the upcoming route reference point is included in the manoeuvring instruction which is output.

3. Method according to one of the preceding claims, wherein the determination of the local diversion depends on the type of road on which the vehicle is located.

4. Method according to one of the preceding claims, wherein the first and/or third threshold values (D₁, T₁, T₃) is a time threshold value (T₁, T₃), and the determined interval (d, t) is a time interval (t).

5. Method according to Claim 4, wherein the time interval (t) is estimated from a current velocity (vₐₖₜ) and a determined distance to the upcoming route reference point, to the route point following the latter, or to the outputting of the upcoming manoeuvring instruction.

6. Method according to one of the preceding claims, wherein the manoeuvring instruction which is output depends on the interval (d, t) from the upcoming route reference point or from the outputting of the upcoming manoeuvring instruction.

7. Computer programme product having programme code for carrying out the method according to at least one of the preceding claims when the computer programme product is run on a computer device.

8. Computer programme product according to Claim 7, which is stored in a computer-readable recording medium.

9. Device for controlling signalling of incoming telephone calls during routing, comprising:
- a device (1040) for detecting an incoming telephone call;
- a device (1040) for signalling the end of a telephone call;
- an output device (1090) for outputting manoeuvring instructions;
- a device (1060) for determining an interval (d, t) from an upcoming route reference point or from the outputting of an upcoming manoeuvring instruction on a predefined route in reaction to the detected telephone call;
- a delay device (1050) which is configured to delay the signalling of the incoming telephone call until a manoeuvring instruction has been output when the determined interval (d, t) from the upcoming route reference point or from the outputting of the upcoming manoeuvring instruction drops below a predefined first threshold value (D₁, T₁);
**characterized by**
- a device (1080) for modifying a manoeuvring instruction, wherein the modified manoeuvring instruction corresponds to an instruction which is shortened with respect to an originally provided manoeuvring instruction;
- a device for determining a distance between the upcoming route reference point and at least one following route reference point; and
- a device (1070) for determining a local diversion, which is configured to calculate a local diversion for the predefined route when the interval (d, t) between the upcoming route reference point and a following route reference point drops below a third threshold value (T₃),
wherein
- the local diversion is determined in such a way that a complex sequence of closely successive manoeuvres is avoided,
- the local diversion is ended when the telephone call or the signalling is ended, and
- the manoeuvring instruction which is output comprises instructions relating to the local diversion.

10. Navigation device (100) comprising the device according to Claim 9.

## Revendications

1. Procédé permettant de commander une signalisation d'appels téléphoniques entrants pendant un guidage routier, comprenant les étapes suivantes consistant à :
- détecter (S1) un appel téléphonique entrant ;
- déterminer (S2) un intervalle (d, t) jusqu'à un point d'itinéraire imminent ou jusqu'à la diffusion d'une instruction de manœuvre imminente sur un trajet prédéfini en réponse à l'appel téléphonique détecté ;
- retarder (S4) la signalisation de l'appel téléphonique entrant jusqu'à ce qu'une instruction de manœuvre ait été diffusée si l'intervalle déterminé (d, t) jusqu'au point d'itinéraire imminent ou jusqu'à la diffusion de l'instruction de manœuvre imminente soupasse une première valeur seuil prédéfinie (D₁, T₁),
**caractérisé par** les étapes consistant à
- déterminer (S41) un intervalle entre le point d'itinéraire imminent et au moins un point d'itinéraire suivant ; et
- déterminer (S44) une déviation locale si l'intervalle (d, t) entre le point d'itinéraire imminent et ledit au moins un point d'itinéraire suivant soupasse une troisième valeur seuil prédéfinie (T₃) ;
- diffuser (S42) une instruction de manœuvre anticipée qui est suivie d'une signalisation de l'appel téléphonique entrant,
- terminer (S6) la déviation locale et la diffusion d'instructions de manœuvre qui ramènent le conducteur sur le trajet prédéfini lorsque l'appel téléphonique est terminé,
la déviation locale étant déterminée de façon à éviter une séquence complexe de manœuvres qui se suivent de près, et
l'instruction de manœuvre diffusée comprenant une instruction modifiée par rapport à une instruction de manœuvre initialement prévue, sous la forme d'une instruction abrégée et d'instructions concernant la déviation locale.

2. Procédé selon la revendication 1, dans lequel ledit au moins un point d'itinéraire suivant le point d'itinéraire imminent est intégré dans l'instruction de manœuvre diffusée.

3. Procédé selon l'une quelconque des revendications précédentes, dans lequel la détermination de la déviation locale dépend du type de la route sur laquelle se trouve le véhicule.

4. Procédé selon l'une quelconque des revendications précédentes, dans lequel la première et/ou la troisième valeur seuil (D₁, T₁, T₃) sont des valeurs seuil de temps (T₁, T₃) et l'intervalle déterminé (d, t) est un intervalle de temps (t).

5. Procédé selon la revendication 4, dans lequel l'intervalle de temps (t) est estimé d'après une vitesse de marche actuelle (vₐₖₜ) et une distance déterminée jusqu'au point d'itinéraire imminent, jusqu'au point de trajet après celui-ci ou jusqu'à la diffusion de l'instruction de manœuvre imminente.

6. Procédé selon l'une quelconque des revendications précédentes, dans lequel l'instruction de manœuvre diffusée dépend de l'intervalle (d, t) jusqu'au point d'itinéraire imminent ou jusqu'à la diffusion de l'instruction de manœuvre imminente.

7. Produit de programme informatique, comprenant du code programme pour effectuer le procédé selon au moins l'une des revendications précédentes si le produit de programme informatique est exécuté sur un dispositif informatique.

8. Produit de programme informatique selon la revendication 7, qui est sauvegardé sur un support d'enregistrement lisible par ordinateur.

9. Dispositif permettant de commander une signalisation d'appels téléphoniques entrants pendant un guidage routier, comprenant :
- un équipement (1040) pour détecter un appel téléphonique entrant ;
- un équipement (1040) pour signaler la fin d'un appel téléphonique ;
- un équipement de diffusion (1090) pour diffuser des instructions de manœuvre ;
- un équipement (1060) pour déterminer un intervalle (d, t) jusqu'à un point d'itinéraire imminent ou jusqu'à une diffusion d'une instruction de manœuvre imminente sur un trajet prédéfini en réponse à l'appel téléphonique détecté ;
- un équipement à retard (1050) qui est aménagé pour retarder la signalisation de l'appel téléphonique entrant jusqu'à ce qu'une instruction de manœuvre ait été diffusée si l'intervalle déterminé (d, t) jusqu'au point d'itinéraire imminent ou jusqu'à la diffusion de l'instruction de manœuvre imminente soupasse une première valeur seuil prédéfinie (D₁, T₁) ;
**caractérisé par**
- un équipement (1080) pour modifier une instruction de manœuvre, l'instruction de manœuvre modifiée correspondant à une instruction abrégée par rapport à une instruction de manœuvre initialement prévue ;
- un équipement pour déterminer un intervalle entre le point d'itinéraire imminent et au moins un point d'itinéraire suivant ; et
- un équipement (1070) pour déterminer une déviation locale, qui est aménagé pour calculer une déviation locale pour le trajet prédéfini si l'intervalle (d, t) entre le point d'itinéraire imminent et un point d'itinéraire suivant soupasse une troisième valeur seuil (T₃), dans lequel
- la déviation locale est déterminée de façon à éviter une séquence complexe de manœuvres qui se suivent de près,
- la déviation locale est terminée si l'appel téléphonique ou le message est terminé, et
- l'instruction de manœuvre diffusée comprend des instructions concernant la déviation locale.

10. Dispositif de navigation (100), comprenant le dispositif selon la revendication 9.
